Europäisches Patentamt

European Patent Office

Office européen des brevets

(19)

(11) Publication number: **0 150 965**
**A2**

(12) # EUROPEAN PATENT APPLICATION

(21) Application number: **85300376.2**

(22) Date of filing: **21.01.85**

(51) Int. Cl.⁴: **G 01 N 35/00**

(30) Priority: **20.01.84 JP 8862/84**

(43) Date of publication of application: **07.08.85**
**Bulletin 85/32**

(84) Designated Contracting States: **DE GB**

(71) Applicant: **FUJI PHOTO FILM CO., LTD., 210 Nakanuma**
**Minami Ashigara-shi, Kanagawa 250-01 (JP)**

(72) Inventor: **Noguchi, Junpei c/o Fuji Photo Film Co.,Ltd.,**
**3-11-46 Senzui, Asaka-shi Saitama (JP)**

(74) Representative: **Arthur, Bryan Edward et al, Withers &**
**Rogers 4 Dyer's Buildings Holborn, London EC1N 2JT**
**(GB)**

(54) **Chemical analytical method and apparatus therefor.**

(57) A chemical analytical method which comprises continuously measuring chemical changes in chemical analytical instruments of the number $\underline{k}$ in such a manner that chemical change in one analytical instrument is measured as much as $\underline{n}$ times, using an analytical instrument-conveying means such as disk having analytical instrument seats of the number $\underline{k}$ which are arranged endlessly in series at equal spaces and moves as a unit along the series of the seats passing through a sample-supplying position and a measuring position, which is based an arrangement in which the numbers $\underline{n}$ and $\underline{k}$ are set to be in mutually prime relation with each other.

# CHEMICAL ANALYTICAL METHOD AND APPARATUS THEREFOR

## BACKGROUND OF THE INVENTION

### Field of the invention

The present invention relates to a chemical analytical method and an apparatus for performing said chemical analysis, and more particularly to a chemical analytical method wherein a sample (a liquid sample) is supplied to chemical analytical instruments and the required times of measurements are carried out while keeping said chemical analytical instruments at a constant temperature for a given period of time (incubation), and an apparatus for performing said chemical analysis.

### Description of prior arts

A chemical analyzer (colorimetric analyzer) capable of automatically analyzing, for example, the contents of components (i.e., analytes) contained in blood such as glucose content, urea nitrogen content, etc. by photometrical means is disclosed in, for example, Japanese Patent Provisional Publication No. 56(1981)-77746 wherein the content of analyte is determined colorimetrically in such a manner that a liquid sample is spotted on the porous spreading layer of a chemical analytical slide containing a sheet-type multilayer analytical element comprising at least a porous spreading layer and a reagent layer, the chemical slides are sequentially supplied to a conveying means and conveyed by the rotation of said conveying means while keeping said slides at a constant temperature by means of a temperature control board, the chemical analytical slides on the way of conveyance are applied through an opening for photometry with a light
having a wavelength previously chosen depending upon a
combination of an analyte and a reagent contained in said
reagent layer, and optical reflection density is
measured.

Analysis can be efficiently made with high accuracy
by this automatic analyzer.  However, the analytical
method using the analyzer employs an end point method or
a single point determination method wherein photometry is
conducted only once on the way of a chemical analytical
route.  In order to apply such an analytical method to
analysis using a reaction rate method, for example, to
the determination of enzyme activity and the like, it is
necessary to provide several openings for photometry as
well as several photometric measuring means.  Further,
even when analysis is made by the end point method or the
single point determination method, another photometry
must be separately conducted before or after the initiation of reaction and hence, a photometric measuring means
for preliminary measurement must be provided in addition
to the photometric measuring means of the end point
determination or the single point determination, if the
liquid sample contains intrinsic interfering substances
or the reagent is unstable against oxidation by air
whereby the background absorption (fog in optical photometry) is required to be deducted.  However, when the
photometric measuring means are provided at several positions, the analytical stage is complicated and the size
of the apparatus becomes larger as a whole, resulting in
increase in cost.

0150965

## SUMMARY OF THE INVENTION

It is an object of the present invention to provide a chemical analytical method which is made possible to carry out efficiently a determination with high accuracy and simply an analytical operation, and which can be performed in a small-sized apparatus as a whole.

It is another object of the present invention to provide an apparatus for performing the chemical analysis according to the above-mentioned method.

The present invention provides a chemical analytical method which comprises continuously measuring chemical changes in chemical analytical instruments of the number $k$ in such a manner that chemical change in one analytical instrument is measured as much as $n$ times, using an analytical instrument-conveying means such as disk having analytical instrument seats of the number $k$ which are arranged endlessly in series at equal spaces and moves as a unit along the series of the seats passing through a sample-supplying position and a measuring position, which is based an arangement in which the numbers $n$ and $k$ are set to be in mutually prime relation with each other.

More specificatlly, the present invention provides a chemical analytical method which comprises continuously measuring chemical changes in at least two chemical analytical instruments in such a manner that chemical change in one analytical instrument is measured plural times, using an analytical instrument-conveying means having analytical instrument seats of the number $k$ which are arranged endlessly in series at equal spaces and moves as a unit along the series of the seats passing through a sample-supplying position and a measuring position, which comprises:

a first stage of supplying the sample to a chemical analytical instrument placed on the instrument seat at the sample-supplying position, and a second stage of moving the instrument seat carrying the sample-supplied chemical analytical instrument thereon in such a manner that the "n"th instrument seat counted from the instrument seat carrying the sample-suppled chemical analytical instrument reaches the sample-supplying position, in which the number $n$ is the given number of times of measurement on one instrument and the numbers $n$ and $k$ are set to be in mutually prime relation with each other,

a third stage of supplying the sample to the chemical analytical instrument on the instrument seat located at the sample-supplying position in the second stage, and a fourth stage of moving the instrument seat carrying the cemical analytical instrument supplied with the sample in the third stage in such a manner that the "n"th instrument seat counted from the instrument seat carrying the chemical analytical instrument supplied with the sample in the third stage reaches the sample-supplying position,

a subsequent stage comprising a combination of the third and fourth stages which is performed as much as k-2 times, and

stages of measuring chemical changes appearing in the chemical analytical instruments at the measuring position in such a manner that chemical change in one analytical instrument is measured as much as $n$ times, the measuring being performed in parallel with the stages of supplying the sample and moving the instrument seats.

The present invention further provides a chemical analytical apparatus utilizing an analytical instrument-conveying means having analytical instrument seats of the number $k$ which are arranged endlessly in series at equal spaces and moves as a unit along the series of the seats passing through a sample-supplying position and a measuring position,

which comprises:

a driving means for driving said conveying means continuously or intermittently at a constant speed; a means for keeping the chemical analytical instruments placed on said seats at a constant temperature; a means for supplying each of said analytical instruments to said conveying means at a fixed position; a means for supplying a sample to be analyzed to each of said analytical instruments at a fixed position; a means for measuring analyte of said sample on said analytical instrument at a fixed position; and a means for removing said analytical instruments from said conveying means at a fixed position after completing the measurements as much as the required times per one chemical analytical instrument in said measuring mean; said analytical instruments-supplying means, said sample-supplying means, said measuring means and said removing means being separately arranged from each other so as to be spaced away from one another at the space between said seats or at an integral multiple of the space between said seats.

## BRIEF DESCRIPTION OF DRAWINGS

Figure 1 is a schematic perspective view showing the first embodiment of the chemical analytical apparatus of the present invention.

Figure 2 is a plan view of the conveying means of the first embodiment of Figure 1.

Figure 3 is a schematic diagram illustrating the sequence of the analytical procedures according to the first embodiment.

Figure 4 is a schematic diagram showing change in the measured value of the first embodiment (n: five times, t: 30 sec., k: 9).

Figure 5 is a plain view of the conveying means of the second embodiment of the apparatus of the present invention.

Figure 6 is a schematic diagram illustrating the sequence of the analytical procedures according to the second embodiment.

Figure 7 is a schematic diagram showing change in the measured value of the second embodiment (n: nine times, t: 15 sec., k: 10).

Figure 8 is a plain view of the conveying means of the third embodiment of the apparatus of the present invention.

Figure 9 is a schematic diagram illustrating the sequence of the analytical procedures according to the third embodiment.

Figure 10 is a schematic diagram showing change in the measured value of the third embodiment (n: three times, t: 2 min., k:25).

Figure 11 is a plain view of the conveying means of the fourth embodiment of the apparatus of to the present invention.

Figure 12 is a schematic diagram showing change in measured value of the fourth embodiment (n: twice, t: 330 sec., k: 33).

Figure 13 is a plain view of the conveying means of the fifth embodiment of the apparatus according to the present invention.

Figure 14 is a schematic diagram showing change in the measured value of the fifth embodiment (n: twice, t: 9 min, t: 57.6 sec., k: 75).

A: position for supplying chemical analytical slide (chemical analytical instrument).

B: position for spotting sample to be analyzed (position for supplying sample to be analyzed).

C: position for removing chemical analytical slide (chemical analytical instrument).

D: position for photometric measurement.

## DETAILED DESCRIPTION OF THE INVENTION

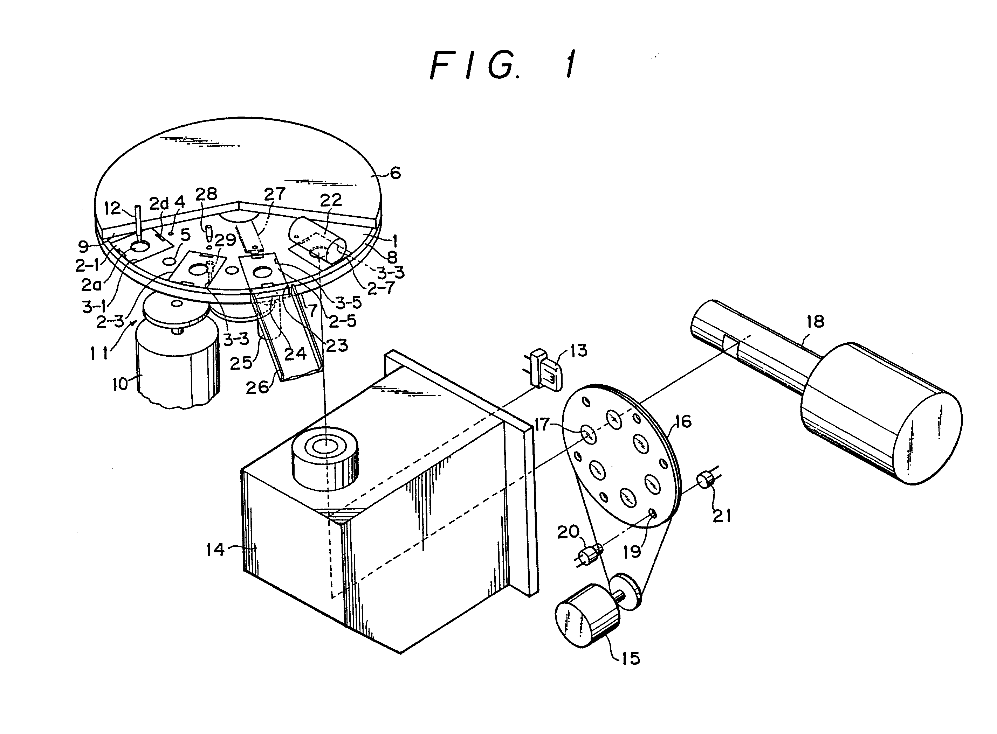

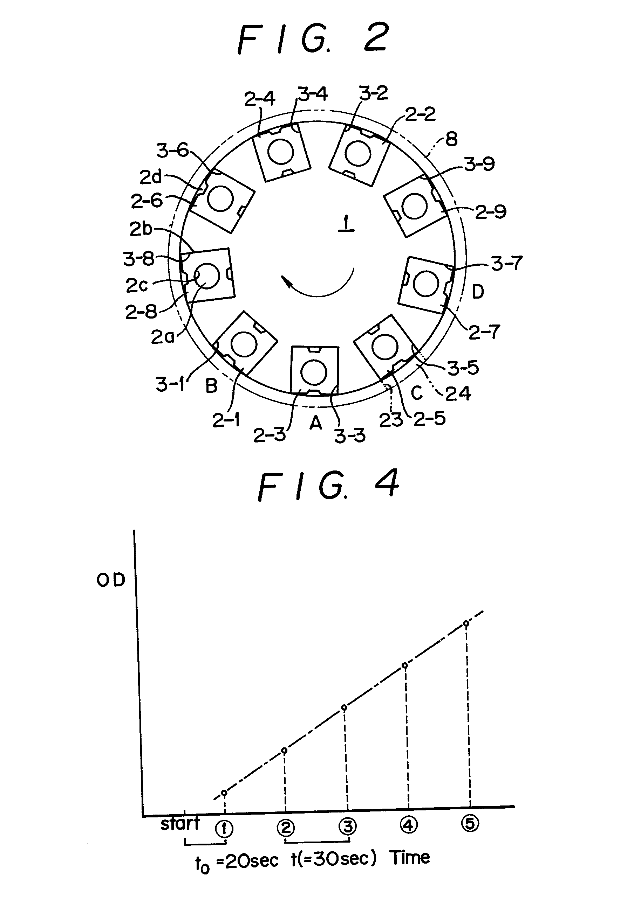

The present invention will be described in more detail in conjunction with the accompanying drawings. For a better understanding of the invention, there is first illustrated the apparatus according to the present invention. Referring to Figures 1 and 2 which illustrate the first embodiment of the present invention, numeral 1 represents a disc-type conveying means, on the outer periphery of which chemical analytical instrument seats 3-1 to 3-9 for placing the required number (nine) of chemical analytical instruments (chemical analytical slides 2) are provided substantially at equal spaces. Each of said seats is formed by a hole or a depressed concave whose outer side part is opened, and each of the insertion holes 3-1 to 3-9 is opened in the radial direction toward outer edge of the conveying means 1.

The chemical analytical slide 2 is formed, for example, by housing a sheet-type multilayer chemical analytical element in a plastic slide frame 2b and providing a hole 2c for spotting a liquid sample at the central part of the upper side of the frame 2b and a hole (not shown) for photometry at the central part of the lower side thereof, said multilayer chemical analytical instrument being integrally assembled by laminating a reagent layer (not shown) onto a water-impermeable transparent support (not shown) and then a porous spreading layer 2a thereon in order. The slide frame may be provided with a notch 2d to facilitate its handling.

0150965

A small hole 4 for detecting a position is provided at the inner part of each of the seats 3-1 to 3-9 of the conveying means, and at least one standard reflecting plate 5 is laid adjoining any one of the seats 3-1 to 3-9. Temperature control boards 6,7 are provided so as to horizontally hold the conveying means 1 therebetween. These temperature control boards 6, 7 are fixed by a frame (not shown), etc. and rotatably support the conveying means 1. A projecting edge 8 is provided upwardly on the edge of the outer periphery of the lower temperature control board 7 in the unitary structure with the board. The conveying means 1 is fitted into the inside of the projecting edge 8, whereby the outer opening part of each of the seats 3-1 to 3-9 is blockaded. The upper temperature control board 6 (this may be a covering means) has a fan-shaped notch 9 so that upper area corresponding to four seats among the seats 3-1 to 3-9 is opened in order to carry out the supply of the chemical analytical slide 2, the spotting of the liquid sample on the chemical analytical slide 2, the measurement of the chemical analytical slide 2 and the discharge of the chemical analytical slide 2 after measurement.

The supply of the chemical analytical slide 2 is conducted at the position A, while the spotting of the liquid sample onto the chemical analytical slide 2 is conducted at the position B adjacent to the position A and downstream therefrom in the direction of the rotation of the conveying means 1. The discharge of the chemical analytical slide 2 is conducted at the position C adjacent to the position A and upstream therefrom in the direction of the rotation of the conveying means 1, and the measurement of the chemical analytical slide 2 is performed at the position D adjacent to the position C and upstream therefrom. A pulse motor 10 (or a continuous motor) is provided in the frame and connected through a power transmission means 11 to the conveying means 1. The means 1 is continuously or intermittently revolved by means of the pulse motor 10, and in the latter case each of the seats 3-1 to 3-9 can be stopped at the supply position A, the spotting position B, the measuring position D and the discharge position C. The upper and lower temperature control board 6, 7 are provided internally with a heater (or cooling instrument utilizing Peltier effect) and heat is supplied to each of the seats 3-1 to 3-9 whereby the chemical analytical slide 2 on which the liquid sample has been spotted can be kept at a constant temperature (for incubation). At the position A, a fresh chemical analytical slide 2 is supplied to each of the seats 3-1 to 3-9 continuously or intermittently moved in order by the hand or a chemical analytical slide supply means (not shown).

At the position B, there is provided a liquid sample spotting device or mean. In the spotting device, for example, a manually operatable micropipette 12 is detachably supported by a frame and the liquid sample in the pipette 12 is spotted on the spreading layer 2a of each of the chemical analytical slides 2 continuously or intermittently passed therethrough in order.

At the measuring position D, there is provided an opening (not shown) for photometric measurement on the lower temperature control board 7. The size of this opening is such that the chemical analytical slides 2 placed on the seats 3-1 to 3-9 of the conveying means 1 do not drop and the chemical analytical slide 2 can be applied therethrough with a light to measure optical reflection density. The chemical analytical slide 2 can receive light for the reflection density-measurement through the opening via a photometric head 14 from a light source 13. The reflected light from the chemical analytical slide 2 is passed through the photometric head 14 and the filter 17 of a filter disc 16 rotated by means of a DC motor 15 (or a pulse motor) and supplied to a photoelectric conversion amplifier such as photomultiplier 18 where relative comparison is made by using a signal of reflected light from the standard reflecting plate 5 as a reference signal and optical reflection density is calculated. The content of analyte in the liquid sample is colorimetrically determined on the basis of the resulting value and then display or printing is made. Similarly, the characteristics of the analyte can be judged. The filter 16 is composed of a plurality of the filters 17 replaceable to meet the analyte. The filter 16 has small holes 19, each thereof being provided at a position corresponding to each filter 17. By applying light and receiving the reflected light through the small hole 19, the position of the filter 17 can be detected by photosensors 20, 21.

At the position D, a guide roller 22 for pressing the slide is provided on the conveying means 1. The outer periphery of the guide roller 22 is covered with a black material having low reflection ratio, preferably a cloth, a black matte filling, a black matte coating having an optical density of 2.5 or above, or with a white coating.

When the chemical analytical slide 2 is positioned above the opening of the temperature control board 7, the guide roller 22 is operated so as to bring the chemical analytical slide 2 into contact closely with the opening, while when the slide 2 is not positioned above the opening, the guide roller blockades the opening. Therefore, when the chemical analytical slide 2 is not positioned above the opening, the optical reflection density of the guide roller 22 is measured so that the presence or the absence of the chemical analytical slide 2 can be judged from the measured optical reflection density of the guide roller 22.

At the discharge position C, the projecting edge 8 has a notch 23 and an on-off door 24 for opening and closing the notch 23 is provided and supported by an elevating device 25, the lower side of which is supported by a frame, etc. When the elevating device 25 is lifted, the notch 23 is blockaded by the door 24, while when the elevating device 25 descends, the notch, i.e. any one of the seats 3-1 to 3-9 is opened outward. A passage 26 for discharging the slide in the direction of the diameter of the conveying means 1 is provided outside the on-off door 24, and communicates with any one of the seats 3-1 to 3-9 when the on-off door 24 descends.

At the discharge position C, there is provided a discharge device having a discharge lever 27 which is provided movably in the direction of the diameter of the conveying means 1. As mentioned above, the on-off door 24 is allowed to communicate with the passage 26. When the discharge lever 27 is then moved outward, the projecting point of the lever is interlocked with one end of the notch 2d or an edge of the chemical analytical slide 2, whereby the slide 2 can be discharged to the passage 26. The numerals 28 and 29 represent photosensors for detecting positions by applying light and receiving the reflected light through the small holes 4 of the conveying means 1.

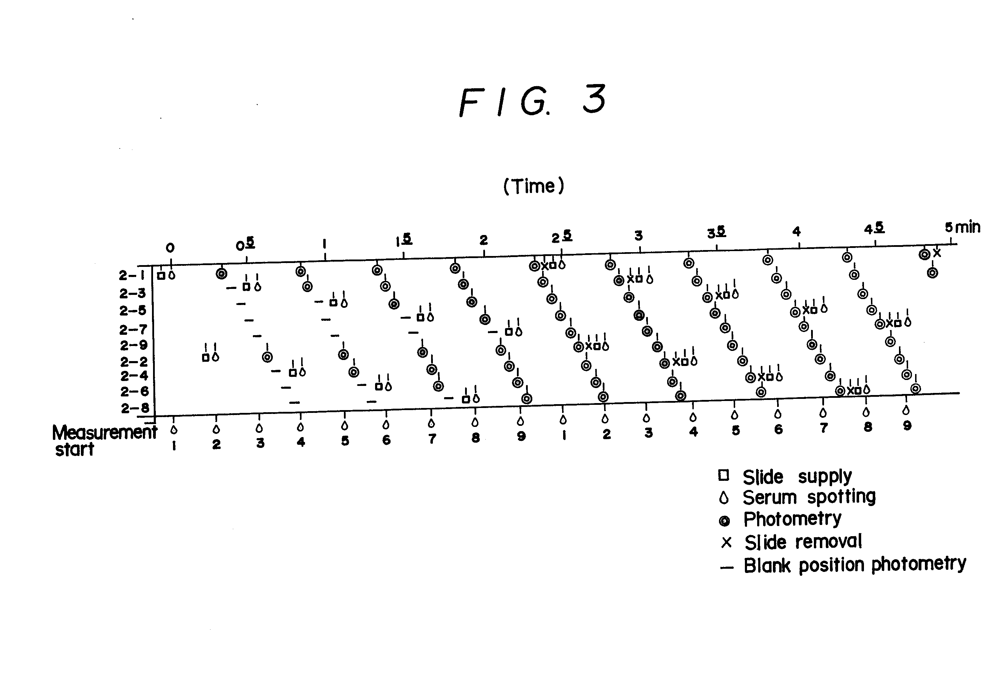

The analytical method of the present invention will be described using the above described first embodiment for the measurement of GPT activity in a liquid sample (serum) by keeping at $37^{\circ}$C the temperature of the enzyme GPT(ALT) analytical slide shown in Example 1 of Japanese Patent Provisional Publication No. 57(1982)-208998. The experiment is done under such conditiones that the number (n) of times of measurements by reaction rate method is five times, interval (t) between measurements is 30 seconds and the number (k) of the seats for GPT analytical slide 2 is nine so that each of the seats 3-1 to 3-9 is rotated in a 40-degree arc every 10/3 seconds in the direction of an arrow shown in Figure 2. As seen from Figures 2 and 3, the GPT analytical slide 2-1 is supplied to the insertion hole 3-1 of the conveying means 1 at the chemical analytical supply position A. The conveying means 1 is then rotated in a 40-degree arc, and after 10/3 seconds, the first GPT analytical slide 2-1 reaches the liquid sample-spotting position B where serum is spotted on the spreading layer of the first GPT analytical slide 2-1 by means of the micropipette 12. After the spotting is completed and the conveying means 1 is rotated in a 160-degree arc, i.e., after 40/3 seconds, the second GPT analytical slide 2-2 is supplied to the seat 3-2. After 10/3 seconds (after the conveying means 1 is rotated in a 40-degree arc), the second GPT analytical slide 2-2 reaches the spotting position B where serum is spotted on the spreading layer of the second GPT analytical slide 2-2 by means of the micropipette 12. Further, after 10/3 seconds (after the conveying means 1 is rotated in a 40-degree arc), i.e., after 60/3 seconds have passed since serum was spotted on the first GPT analytical slide 2-1, the slide 2-1 reaches the measuring position D where the first photometric measurement is made. After the conveying means 1 is further rotated in a 120-degree arc, i.e., after the lapse of 30/3 seconds, the seat 3-3 reaches the supply position A where the third GPT analytical slide 2-3 is supplied to the seat 3-3. In this way, the first to the ninth GPT analytical slides 2-1 to 2-9 are supplied to the seats 3-1 to 3-9 which are conveyed to the supply position A in sequence every 50/3 seconds by rotation of the conveying means 1.

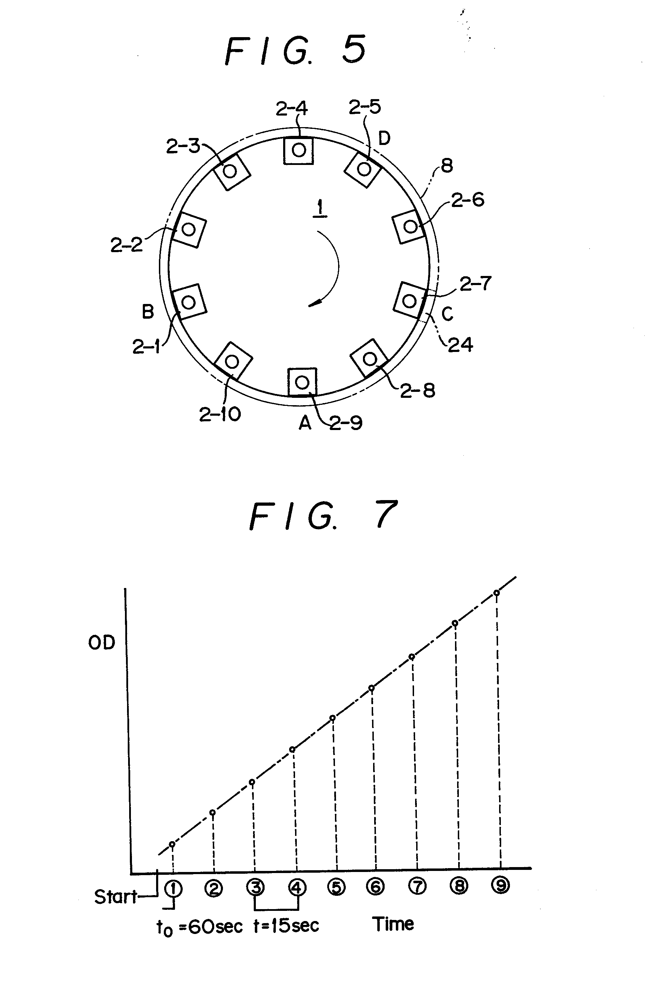

After completion of the supply, serum is spotted on the GPT analytical slides 2-1 to 2-9 which are conveyed to the spotting position B in sequence every 10/3 seconds by rotation of the conveying means 1. After the spotting was complete, the photometric measurement of each of the GPT analytical slides 2-1 to 2-9 is conducted at the measuring position D every 60/3 seconds by the rotation of the conveying means 1. When the chemical analytical slide is not yet placed on the depressed concave part which reached the measuring position D, the photometry of the guide roller is conducted at the position D, but the measured value is finally excluded. After the first measurement operation, the measurements of the second to the fifth times of each of the GPT analytical slides 2-1 to 2-9 are conducted at the measuring position D in sequence every 90/3 seconds by the rotation of the conveying means 1. Namely, as shown in Figure 4, the OD value of each of the GPT analytical slides 2-1 to 2-9 is read five times and the activity of the objective enzyme is determined from the rate of change. The GPT analytical slides 2-1 to 2-9 whose fifth measurement has been completed, reach the chemical analytical slide-removing position C after 10/3 seconds, i.e., after the means 1 is rotated in a 40-degree arc from the measuring position D. In the position C, the elevating device 25 is operated so that the on-off door 24 is made to descend and the discharging passage 26 is made to communicate with the seats 3-1 to 3-9 in sequence. The discharge lever 27 is then moved outward and the GPT analytical slides 3-1 to 3-9 are discharged to the passage 26 in order. Thus, nine samples are colorimetrically determined within 150 seconds.

The measurement of the GPT analytical slide 2 can be continuously made by repeatedly carrying out the above-described operations.

Figure 5 shows the second embodiment of the apparatus of the present invention wherein ten seats consisting of the parts 3-1 to 3-10 are provided at equal spaces on the outer periphery of the conveying means 1 so that the measurements of ten chemical analytical slides 2 can be always made; the supply position A, the spotting position B, the discharge position C and the measuring position D are positioned every other seat; and other construction is substantially the same as that of the first embodiment.

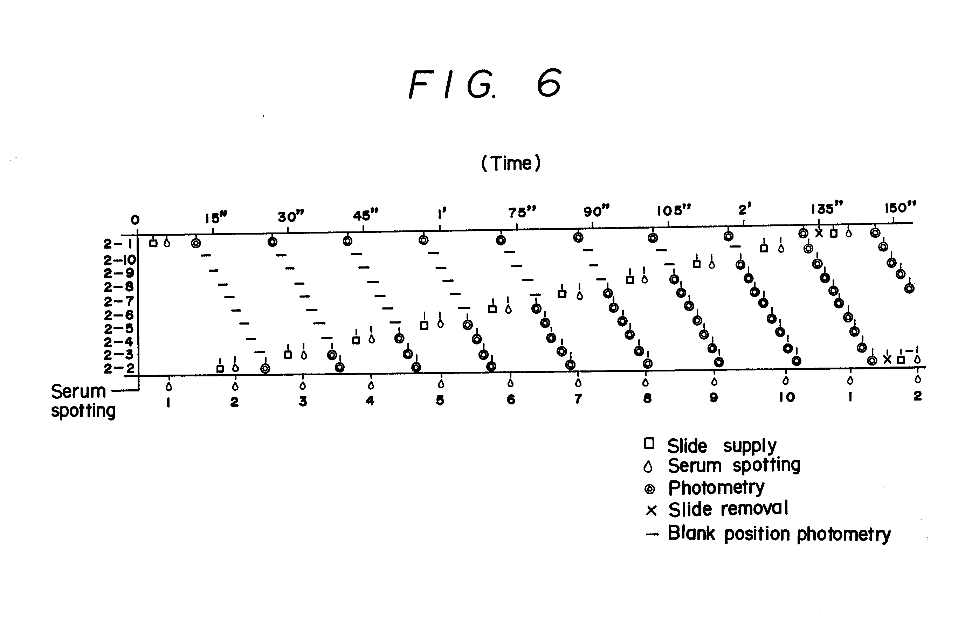

The following description relates to the analytical method of the present invention using the above second embodiment for the measurement of GOT activity in serum by keeping at 37$^{\circ}$C the temperature of the enzyme GOT(AST) analytical slide shown in Example 4 of Japanese Patent Provisional Publication No. 57(1982)-208998. The experiment is performed under such conditions that the number (n) of times of measurements by the reaction rate method is nine times, interval (t) between measurements is 15 seconds and each of the seats 3-1 to 3-10 for the GOT analytical slide 2 is rotated in a 36-degree arc every 1.5 seconds in the direction of an arrow shown in Figure 5. As seen from Figures 5 and 6, the first to tenth GOT analytical slides 2-1 to 2-10 are supplied to the seats 3-1 to 3-10 which are conveyed to the supply position A in sequence every 13.5 seconds by the rotation of the conveying means 1. After the supply is complete, serum is spotted on the GOT analytical slides 2-1 to 2-10 by means of the micropipette 12, said slides being conveyed to the spotting position B in sequence every three sec. by the rotation of the conveying means 1. After the spotting is complete, each photometric measurement of the GOT analytical slides 2-1 to 2-10 is conducted at the measuring position D in order every six seconds by the rotation of the conveying means 1. After the measurement was complete, the measurements of the second to the ninth times of each of the GOT analytical slides 2-1 to 2-10 are conducted at the measuring position D in order every 15 seconds by the rotation of the conveying means 1.

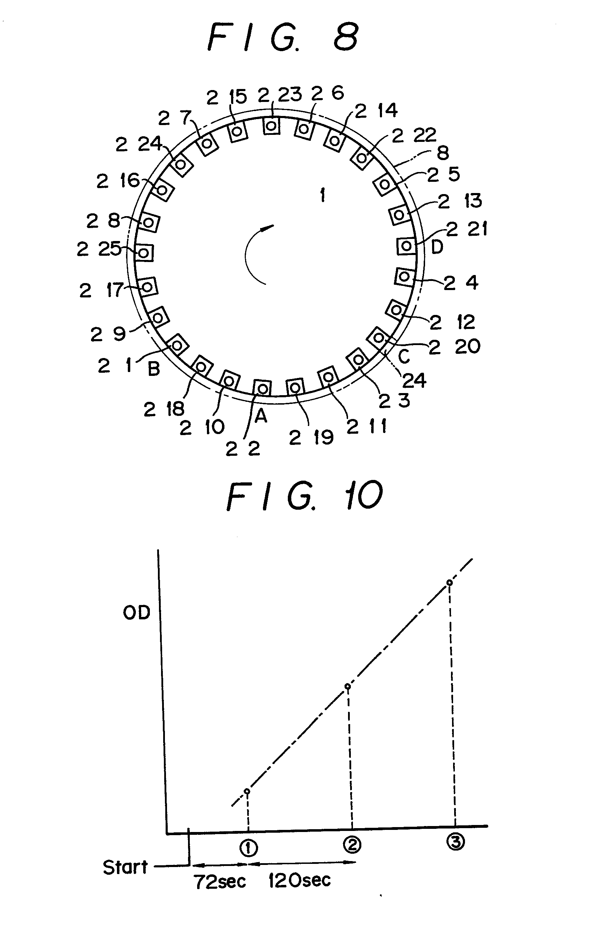

As shown in Figure 7, the OD value of each of the GOT analytical slides 2-1 to 2-10 is read nine times, and the activity of the objective enzyme is colorimetrically determined from the rate of change. The GOT analytical slides 2-1 to 2-10 whose ninth measurement has been completed, reach the discharge position C every three sec. by the rotation of the conveying means 1, and are discharged to the discharge passage 26 in order as described above. Thus, 10 samples are analyzed within 135 seconds.

Figure 8 shows the third embodiment of the apparatus of the present invention wherein 25 seats consisting of the parts 3-1 to 3-25 are provided at equal spaces on the outer periphery of the conveying means 1 so that the measurement of 25 chemical analytical slides 2 can be always made; the spotting position B is positioned three seats beyond the supply position A, the discharge position C is positioned four seats beyond the supply position A and the measuring position D is positioned three seats beyond discharge position C; and other construction is substantially the same as that of the first embodiment.

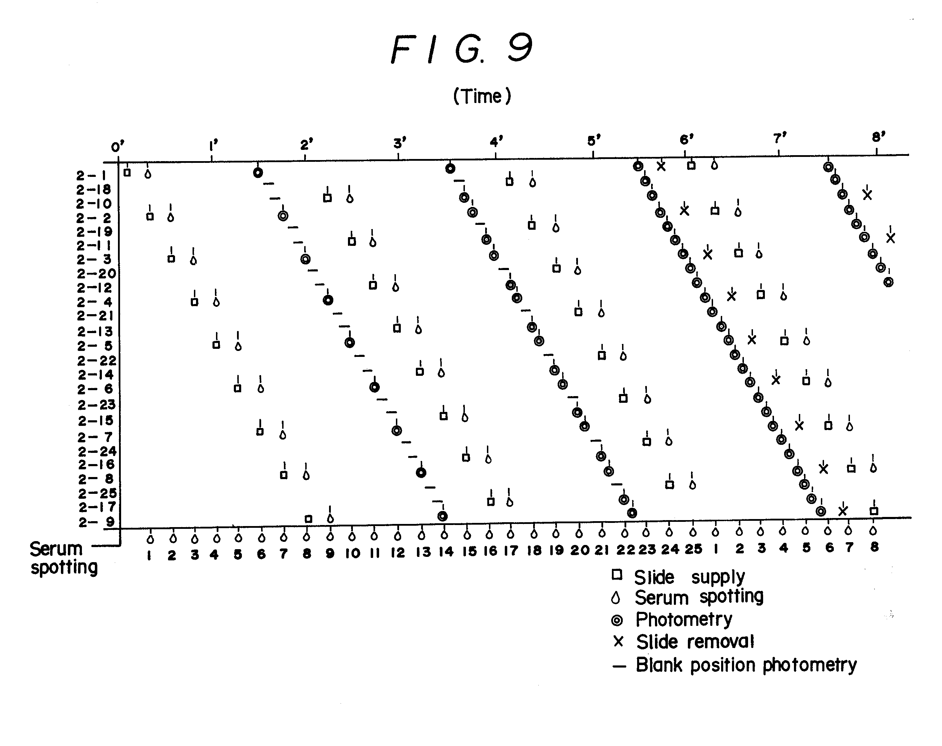

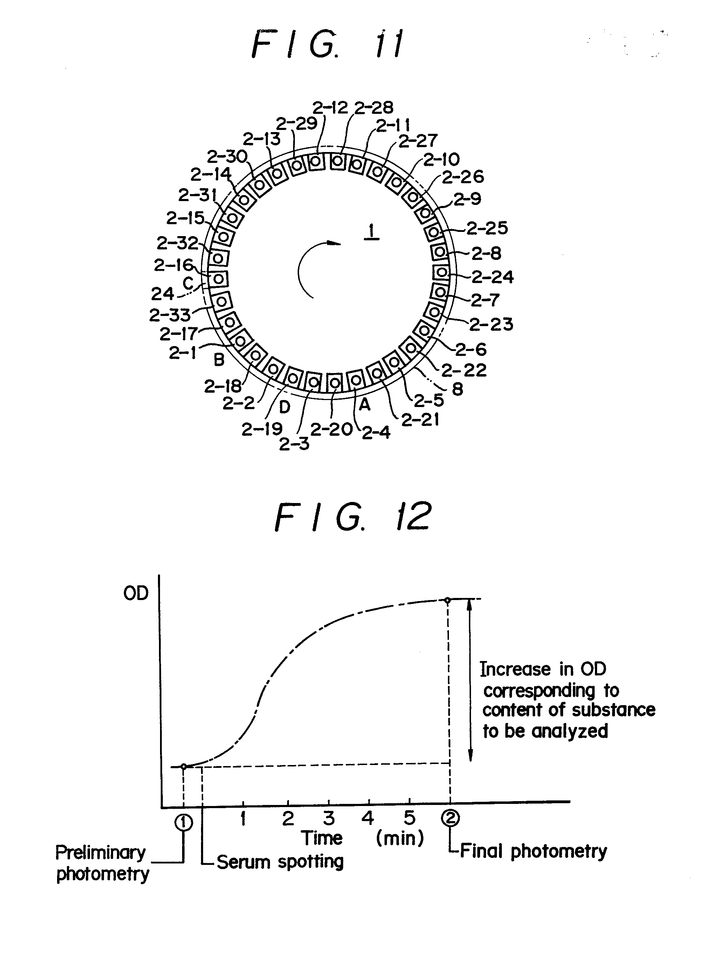

The following description relates to the analytical method of the present invention using the above third embodiment for the measurement of amylase activity in serum by keeping at $37^{\circ}C$ the temperature of the amylase analytical slide shown in Example 1 of Japanese Patent Provisional Publication No. 57(1982)-40649. Experiment is conditioned such that the number (n) of times of measurements by the reaction rate method is three times, interval (t) between measurements is 120 seconds and the number (k) of the seats 3-1 to 3-25 for the amylase analytical slide 2 is 25 so that each of the seats 3-1 to 3-25 of the conveying means 1 is rotated in a 14.4-degree arc every 4.8 seconds in the direction of an arrow shown in Figure 8. As seen from Figures 8 and 9, the first to the 25th amylase analytical slides 2-1 to 2-25 are supplied to the seats 3-1 to 3-25 which are conveyed to the supply position in order every 14.4 seconds by the rotation of the conveying means 1. After supply, serum is spotted (deposited) on the amylase analytical slides 2-1 to 2-25 by means of the micropipette 12, said slides being conveyed to the spotting position B in order every 14.4 seconds by the rotation of the conveying means 1. After spotting, the each photometric measurement of the amylase analytical slides 2-1 to 2-25 is conducted at the measuring position D every 72 seconds by the rotation of the conveying means 1. After the first measurement is complete, the second and the third photometric measurements of each of the amylase analytical slides 2-1 to 2-25 are conducted at the measuring position D in order every 120 seconds by the rotation of the conveying means 1. As shown in Figure 10, the OD value of each of the amylase analytical slides 2-1 to 2-25 is read three times, and the activity of the objective enzyme is colorimetrically determined. After the third measurement is completed, the amylase analytical slides 2-1 to 2-25 reach the discharge position C in order every 14.4 sec. by the rotation of the conveying means 1, and are discharged to the passage 26. Thus, 25 samples are analyzed within 6 seconds.

According to this embodiment, the effect of the change of the analytical slide 2 with time can be eliminated and hence, measuring accuracy can be improved as compared with conventional end point method.

Figure 11 shows the fourth embodiment of the apparatus of the present invention. This embodiment is intended for the end point measurement wherein 33 seats consisting of the parts 3-1 to 3-33 are provided at equal spaces on the outer periphery of the conveying means 1 so that the measurement of 33 chemical analytical slides 2 can be always made, the measuring position D is positioned three seats beyond the supply position A and downstream from the position A in the direction of rotation of the conveying means 1, the spotting position B is positioned three seats beyond the position D and the discharge position C is positioned three seats beyond the position B in turn; and other construction is substantially the same as that of the first embodiment.

The following description relates to the analytical method of the present invention using the above fourth embodiment for carrying out analysis by keeping at $37^{\circ}C$ the glucose analytical slide shown in Example 1 of Japanese Patent Provisional Publication No. 57(1982)-66359. In this case, experiment is conditioned such that the number (n) of times of measurements is twice of preliminary photometry and final photometry, intervals (t) between the preliminary measurement and the final measurement is 330 seconds and the number (k) of the seats 3-1 to 3-33 for the glucose analytical slide 2 is 33 so that each of the seats 3-1 to 3-33 of the conveying means 1 is rotated in a 360/33 degree arc every 10 seconds in the direction of an arrow shown in Figure 11.

As seen from Figure 11, the first to the 33th glucose analytical slides 2-1 to 2-33 are supplied to the seats 3-1 to 3-33 which are conveyed to the supply part A in order every 20 seconds by the rotation of the conveying means 1. After the supply is complete, the preliminary photometry of the background density (fog) of the analytical slides 2-1 to 2-33 is conducted, said slides being conveyed to the measuring position D in order every 30 seconds by the rotation of the conveying means 1. After the preliminary photometry is complete, serum is spotted (deposited) on the glucose analytical slides 2-1 to 2-33 by means of the micropipette 12, said slides being conveyed to the spotting position B in order every 30 seconds by the rotation of the conveying means 1. After the spotting is complete, the final photometric measurement of the glucose analytical slides 2-1 to 2-33 is made at the measuring position D every 30 seconds by the rotation of the conveying means 1.

As shown in Figure 12, an increase in the OD value of each of the glucose analytical slides 2-1 to 2-33 is read. After the final measurement (photometry) is completed, the glucose analytical slides 2-1 to 2-33 reach the discharge position C every 60 seconds by the rotation of the conveying means 1, and are discharged to the passage 26 in order. Thus, 33 samples are analyzed within 660 seconds.

According to the embodiment of the present invention wherein the preliminary photometry of the background density (fog) of the analytical slide is conducted, the effect of the change of the analytical slide with time (discoloration or coloration due to the oxidation of a color former by air, or discoloration or coloration of a reagent with time) can be eliminated and hence, analytical accuracy can be improved as compared with conventional end point measuring method wherein the measurement is made only once. In the specification of the present invention, the preliminary measurement of background absorption (background density or fog) is included in the measurement of the substance to be measured.

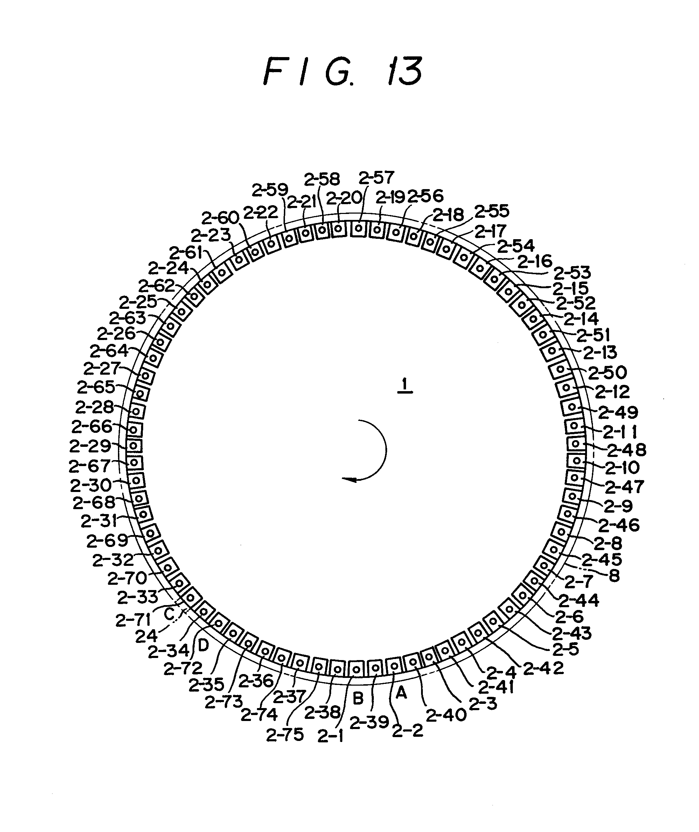

Figure 13 shows the fifth embodiment of the apparatus of the present invention wherein 75 seats consisting of the parts 3-1 to 3-75 are provided at equal spaces on the outer periphery of the conveying means so that the measurement of 75 chemical analytical slides 2 can be always made; the spotting position B is positioned two seats beyond the supply position A and downstream from the position A in the direction of the rotation of the conveying means 1, the measuring position D is positioned eight seats beyond the position B and the discharge position C is one seat away from the position D; and the other construction is substantially the same as that of the first embodiment.

The following description relates to the analytical method using the above fifth embodiment for carrying out analysis by keeping at $25^{\circ}C$ the urea nitrogen analytical slide shown in Example 1 of Japanese Patent Provisional Publication No. 57(1982)-101759. In this case, experiment is performed under such conditiones that the number (n) of times of measurements is twice by the reaction rate method, interval (t) between measurements is 9 minutes and the number (k) of the seats 3-1 to 3-75 for the urea nitrogen analytical slide 2 is 75 so that each of the seats 3-1 to 3-75 of the conveying means 1 is rotated in a 4.8-degree arc every 7.2 seconds in the direction of an arrow shown in Figure 13. The first to the 75th urea nitrogen analytical slides 2-1 to 2-75 are supplied to the seats 3-1 to 3-75 which are conveyed to the supply position A in order every 14.4 seconds by the rotation of the conveying means 1. After the supply is complete, serum is spotted (deposited) on the urea nitrogen analytical slides 2-1 to 2-75 by means of the micropipette 12, said slides being conveyed to the spotting position B in order every 14.4 seconds by the rotation of the conveying means 1. After the spotting is complete, the each photometric measurement of the urea nitrogen analytical slides 2-1 to 2-75 is made at the measuring position D in order every 72 seconds by the rotation of the conveying means 1. After the first measurement is completed, the second photometric measurement of each of the urea nitrogen analytical slides 2-1 to 2-75 is conducted at the measuring position D in order every 9 minutes by the rotation of the conveying means 1.

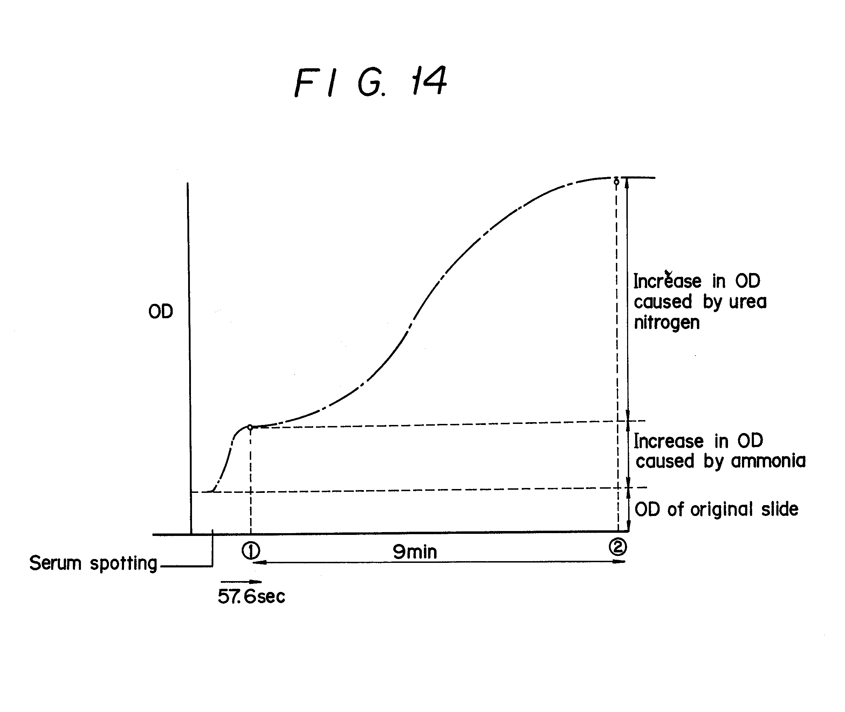

As shown in Figure 14, an increase (intrinsic ammonia) in OD value caused by ammonia in each of the urea nitrogen analytical slides 2-1 to 2-75 is read and ammonia content is colorimetrically determined from each OD value. An increase (ammonia from serum urea in addition to intrinsic ammonia) in OD value caused by urea nitrogen in each of the urea nitrogen analytical slides 2-1 to 2-75 is read in the second photometric measurement calculating urea nitrogen content from the difference between the above OD values. In this way, the analysis is carried out. After the second measurement is completed, the urea nitrogen analytical slides 2-1 to 2-75 reach the discharge position C in order every 10 seconds by the rotation of the conveying means 1 and are discharged to the passage 26 in order. Thus, 75 samples are analyzed within 18 min.

According to conventional analytical method, there can be measured only the sum of intrinsic ammonia and ammonia from serum urea, while the apparatus of the present invention enables separately measuring both ammonia contents.

When the above-described first, second and third embodiments of the present invention are used for carrying out analysis by the reaction rate method, the factors $n$, $t$ and $k$ (wherein n is an integer of 2 or greater and represents the number of times of measurements of each chemical analytical slide 2, t is the measuring interval of each chemical analytical slide 2, and k is an integer of 2 or greater and represents the number of the seats for the chemical analytical slide 2 of the conveying means 1) must satisfy such conditions that n and k are prime to each other and preferably the revolving speed of

0150965

the conveying means 1 is either a round/t or such that the rotation of (1/k) rounds is made at time intervals of t/k. The supply of the chemical analytical slides 2 to the seats 3 of the conveying means 1 is carried out at only one position (fixed position) , i.e., only the supply position A, and the slides are supplied to the "n"th seat 3 in order passed through the position A. Only one measuring position is provided at the position D, and there is measured every chemical analytical slide 2 passed therethrough. After the measurement is completed, every "n"th chemical analytical slide 2 is discharged in order from one discharge position C. Accordingly, k samples can be continuously analyzed for a period of n·t. In the present invention, the measurement is made at time intervals of t/k and the supply, the discharge and the spotting of the chemical analytical slide 2 are carried out at time intervals of nt/k. Thus, any stage is preferably operated at regular intervals so that there is no fear of means such as the driving system of the apparatus, measured data processing mean, etc. being complicated.

When the fourth embodiment of the present invention is used for carrying out analysis by the end point method, the measuring position D is provided at a position which is situated downstream from the supply position A in the direction of the rotation of the conveying means 1 and between the supply position A and the spotting position B, but relatively near the supply position A, and the preliminary measurement and the final measurement can be conducted at the measuring position D in a similar manner to that in the reaction rate method. Therefore, the apparatus of the present invention is effectively applicable to analysis using a reagent which is unstable against oxidation by air so that background absorption (fog) must be deducted.

When the fifth embodiment using double measurement is used for carrying out analysis by the reaction rate method, the measuring position D is provided at a position which is situated near to the spotting position B, but downstream from the position B in the direction of the rotation of the conveying means 1, and at this measuring position D the first measurement (preliminary measurement) is conducted in a short time after spotting a sample and the second measurement (final measurement) can be conducted after the lapse of a time t. Accordingly, intrinsic interfering substances are measured in the preliminary measurement, the final measurement gives the sum of the intrinsic interfering substances and a substance to be measured, and as a result, the value of the substance can be determined from the difference between both measured values so that a sample containing intrinsic interfering substances can be effectively analyzed.

While various embodiments for the dry chemistry slide using the sheet-type chemical analytical slide comprising the multilayer chemical instrument have been described in some detail, it will be understood that the present invention can be applied to dry analysis using a flat-form container type chemical analytical instrument and multiple measurement of liquid analytical method using cuvette, test tube or the like. As the method of measurement, there can be used not only colorimetry, but also fluorometry, emission spectroanalysis, turbidimetry, potentiometry (pH, $pO_2$, $pH_2O_2$, $pNH_3$, etc.) and the like. The chemical analytical route is not limited to the circle as described in the above embodiments, but other forms, for example, a quadrangle chemical analytical route using a frame driving means disclosed in Japanese Patent Provisional Publication No. 58(1983)-21566 and an elliptic analytical chemical route using a chain driving means disclosed in Japanese Patent Provisional Publication No. 58(1983)-21567 may be used.

These can be applied to analysis using the reaction rate method, when k represents the number of carriers, n is the number of times of measurements, a running speed is a round/t and the chemical analytical slide is supplied to every n-th carrier. Though the conveying means 1 forming a circular chemical analytical route in the above-described embodiments is in a disc form, the means may be in other forms such as ring, conical or hemispherical form. The conveying means is continuously or intermittently rotated. At the supply position A, there may be provided an on-off door and a supply passage as in the discharge position C, and the chemical analytical slide 2 may be supplied through the supply passage to the seat 3 of the conveying means 1 by means of a supply lever. Although the upper and the lower temperature control boards 6 and 7 are used as the constant temperature mean, the upper temperature control board 6 may be omitted. Further, it will be understood that modifications can be made in the embodiments described without departing from the scope of the present invention.

As described above, the required number of the chemical analytical instruments can be automatically measured at regular time intervals in the present invention so that determination can be efficiently made with high accuracy. The supply of the chemical analytical instruments is carried out in order at a certain fixed position and at time intervals corresponding to the number of the required times of the measurements of the instruments. After the supply is complete, the measurement of the substance to be measured is made at a predetermined position in order of the chemical analytical instruments passed therethrough. The instruments are measured the number of the required times of measurements. After measurement, the chemical analytical instruments are discharged in order. In this way, the measurement of the chemical analytical instrument is made several times at a given position so that the present invention has advantages in that the measurement can be made in a simple manner, the apparatus can be miniaturized as a whole and the cost can be reduced.

CLAIMS:

1.    A chemical analytical method which comprises continuously measuring chemical changes in at least two chemical analytical instruments in such a manner that chemical change in one analytical instrument is measured plural times, using an analytical instrument-conveying means having analytical instrument seats of the number $k$ which are arranged endlessly in series at equal spaces and moves as a unit along the series of the seats passing through a sample-supplying position and a measuring position, which comprises:

a first stage of supplying the sample to a chemical analytical instrument placed on the instrument seat at the sample-supplying position, and a second stage of moving the instrument seat carrying the sample-supplied chemical analytical instrument thereon in such a manner that the "n"th instrument seat counted from the instrument seat carrying the sample-suppled chemical analytical instrument reaches the sample-supplying position, in which the number $n$ is the given number of times of measurement on one instrument and the numbers $n$ and $k$ are set to be in mutually prime relation with each other,

a third stage of supplying the sample to the chemical analytical instrument on the instrument seat located at the sample-supplying position in the second stage, and a fourth stage of moving the instrument seat carrying the cemical analytical instrument supplied with the sample in the third stage in such a manner that the "n"th instrument seat counted from the instrument seat carrying the chemical analytical instrument supplied with the sample in the third stage reaches the sample-supplying position,

a subsequent stage comprising a combination of the third and fourth stages which is performed as much as k-2 times, and

stages of measuring chemical changes appearing in the chemical analytical instruments at the measuring position in such a manner that chemical change in one analytical instrument is measured as much as $n$ times, the measuring being performed in parallel with the stages of supplying the sample and moving the instrument seats.

2.    The chemical analytical method as claimed in claim 1, in which the stages of moving the instrument seat are all done at equal speeds.

3.    The chemical analytical method as claimed in claim 1, which comprises a stage of introducing the chemical analytical instruments into the instrument seats of the analytical instrument-conveying means at a fixed position.

4.    The chemical analytical method as claimed in claim 1, which comprises a stage of discharging the chemical analytical instruments from the instrument seats of the analytical instrument-conveying means at a fixed position.

5.    The chemical analytical method as claimed in claim 1, in which the analytical instrument-conveying means is a disc and the analytical instrument seats are located on the periphery of said disc.

6. The chemical analytical method as claimed in any claim in claims 1 to 5, in which the chemical analytical instrument is a sheet-type chemical analytical instrument and the measurement of chemical reaction appearing on the analytical instrument is performed photometrically.

7. A chemical analytical apparatus utilizing an analytical instrument-conveying means having analytical instrument seats of the number $k$ which are arranged endlessly in series at equal spaces and moves as a unit along the series of the seats passing through a sample-supplying position and a measuring position,
which comprises:
a driving means for driving said conveying means continuously or intermittently at a constant speed; a means for keeping the chemical analytical instruments placed on said seats at a constant temperature; a means for supplying each of said analytical instruments to said conveying means at a fixed position; a means for supplying a sample to be analyzed to each of said analytical instruments at a fixed position; a means for measuring analyte of said sample on said analytical instrument at a fixed position; and a means for removing said analytical instruments from said conveying means at a fixed position after completing the measurements as much as the required times per one chemical analytical instrument in said measuring mean; said analytical instruments-supplying means, said sample-supplying means, said measuring means and said removing means being separately arranged from each other so as to be spaced away from one another at the space between said seats or at an integral multiple of the space between said seats.

0150965

8.    The chemical analytical apparatus as claimed in claim 7, in which the analytical instrument-conveying means is a disc and the analytical instrument seats are located on the periphery of said disc.

9.    The chemical analytical apparatus as claimed in in claim 7 or 8, in which the chemical analytical instrument is a sheet-type chemical analytical instrument and the measuring means is a photometric measuring means.

FIG. 1

# F I G. 2

# F I G. 4

F I G. 3

(Time)

□ Slide supply
◊ Serum spotting
◉ Photometry
× Slide removal
— Blank position photometry

# F I G. 5

# F I G. 7

# FIG. 6

(Time)

□ Slide supply
◊ Serum spotting
◉ Photometry
× Slide removal
— Blank position photometry

# F I G. 8

# F I G. 10

FIG. 9

(Time)

□ Slide supply
◊ Serum spotting
◉ Photometry
✕ Slide removal
— Blank position photometry

7/10

0150965

# F I G. 11

# F I G. 12

FIG. 13

9/10

0150965

# FIG. 14

- OD
- Increase in OD caused by urea nitrogen
- Increase in OD caused by ammonia
- OD of original slide
- Serum spotting
- ① 57.6sec
- 9min
- ②